# EUROPEAN PATENT APPLICATION

(11) **EP 0 866 351 A1**
(43) Date of publication of application: **23.09.1998**
(21) Application number: 98301448.1
(22) Date of filing: 27.02.1998
(51) Int. Cl.: G02B 7/182, G02B 26/12, G02B 26/10

(54) **Transparent cylindrical cover of a polygon mirror for noise reduction**

(30) Priority: 14.03.1997 US 815041
(71) Applicant: XEROX CORPORATION, Rochester, New York 14644 (US)
(72) Inventor: Ang, Anthony, Long Beach, California 90805 (US); Mirchandani, Vinod, Agoura, California 91301 (US)
(74) Representative: Skone James, Robert Edmund

(57) **Abstract**

A transparent cylindrical cover (144) is disclosed to cover a rotating polygon mirror (142). The transparent cylindrical cover (144) of this invention substantially reduces the noise generated by the rotation of a rotating polygon mirror (142) at high speeds such as 30 Krpm. The transparent cylindrical cover of this invention creates a uniform area around the rotating polygon mirror in order to reduce the turbulence created by nonuniformity of the path of the air flow.

## Description

This invention relates to a cover of a rotating polygon mirror in a raster scanning system, and more particularly, to a cover which substantially reduces noise of a high speed rotating polygon mirror.

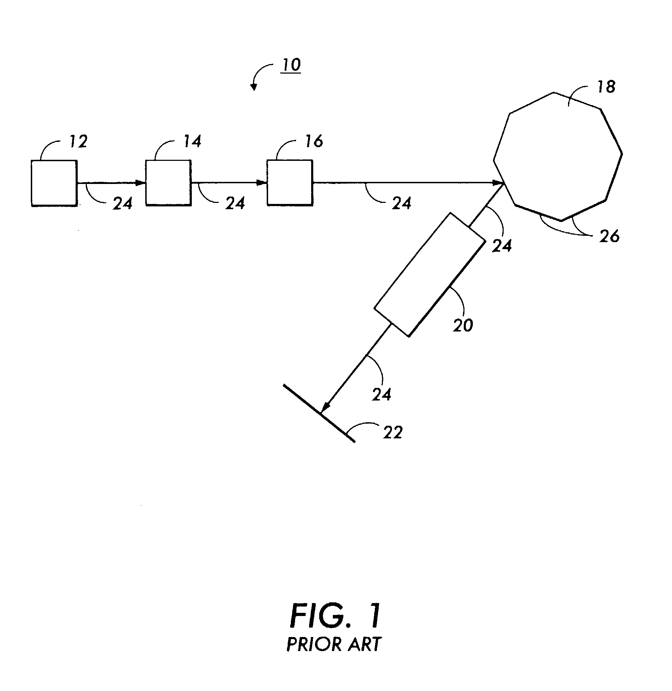

Referring to Figure 1, there is shown a tangential (fast-scan) view of a prior art raster output scanner 10 of a printing system. The raster scanning system 10 utilizes a laser light source 12, a collimator 14, pre-polygon optics 16, a multi-faceted rotating polygon mirror 18 as the scanning element, post polygon optics 20 and a photosensitive medium 22.

The laser light source 12 sends a light beam 24 to the rotating polygon mirror 18 through the collimator 14 and the pre-polygon optics 16. The collimator 14 collimates the light beam 24 and the pre-polygon optics 16 focuses the light beam 24 in the sagittal or cross-scan plane onto the rotating polygon mirror 18. The facets 26 of the rotating polygon mirror 18 reflect the light beam 24 and also cause the reflected light beam 24 to revolve about an axis near the reflection point of the facet 26. The reflected light beam 24 is utilized through the post polygon optics 20 to scan a document at the input of an imaging system or can be used to impinge upon a photographic film or a photosensitive medium 22, such as a xerographic drum at the output of an imaging system. Hereinafter, for the purpose of simplicity the "rotating polygon mirror" will be referred to as "polygon".

In order to increase the speed of printing, the scan lines have to be scanned faster. This in turn requires the polygon to rotate at a higher speed. As the speed of the polygon is increased, the polygon will generate noise. The noise level increases as the polygon rotates faster. At high speeds such as 30,000 revolution per minute (Krpm), the noise level is intolerable. Therefore, in order to have a quiet high speed printing system, the noise level of the polygon has to be substantially reduced.

It is an object of this invention to substantially reduce the noise level of a rotating polygon at high speeds such as 30 Krpm.

In accordance with the present invention, a raster scanning system comprises:
a closed housing having a cylindrical wall interposed between a top and a base;
a rotating polygon mirror,
said rotating polygon mirror being located in said housing and being rotatably mounted on said base of said housing,
said housing being of a dimension to accommodate the rotation of said rotating polygon mirror, and
a portion of said cylindrical wall being transparent for transmission of a light beam to and from said rotating polygon mirror.

The transparent cylindrical cover of this invention creates a uniform area around the rotating polygon mirror in order to reduce the turbulence created by non-uniformity of the path of the air flow. The transparent cylindrical cover of this invention is preferably used with a sagittal offset scanning system in order to compensate for the problems created by a cylindrical cover placed over the polygon.

### BRIEF DESCRIPTION OF THE DRAWINGS

Figure 1 shows a tangential (fast-scan) view of a prior art raster output scanner of a printing system;
Figure 2 shows a prior art isometric view of a rotating polygon mirror with its cylindrical cover;
Figure 3 shows a tangential view of a prior art scanning system incorporating the rotating polygon of Figure 2;
Figure 4 shows a cross sectional view of the cover of Figure 2 along plane A-A;
Figure 5 shows a tangential cross sectional view of a cover with a cylindrical window for covering a rotating polygon mirror;
Figure 6 shows a tangential view of a tangential offset scanning system incorporating the rotating polygon mirror of Figure 5 and its cover;
Figure 7 shows a sagittal view of a scanning system of this invention;
Figure 8 shows a sagittal view of a scanning system of this invention with a reduced angle between the light beam and the optical scanning system;
Figure 9 shows an isometric view of a preferred embodiment of this invention; and
Figure 10 shows an isometric view of an alternative embodiment of this invention.

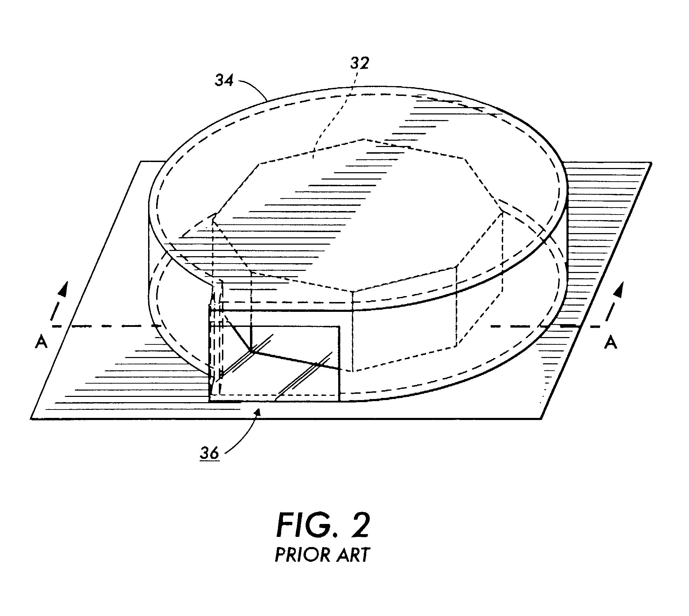

In order to resolve the noise problem, several approaches were taken. Referring to Figure 2, there is shown a prior art isometric view of a rotating polygon mirror 32 with its cylindrical cover 34. Polygon 32 is mounted on a base 36 and the cylindrical metal cover 34 which has an opening 36 is placed over the polygon 32 in a concentric manner. Cover 34 is secured to the base 36 by securing means such as screw or adhesive.

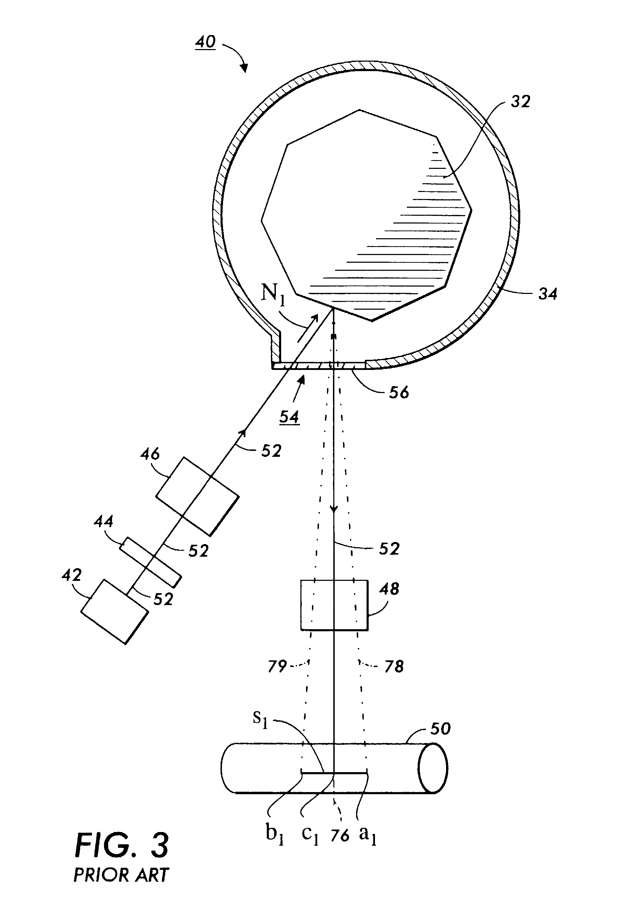

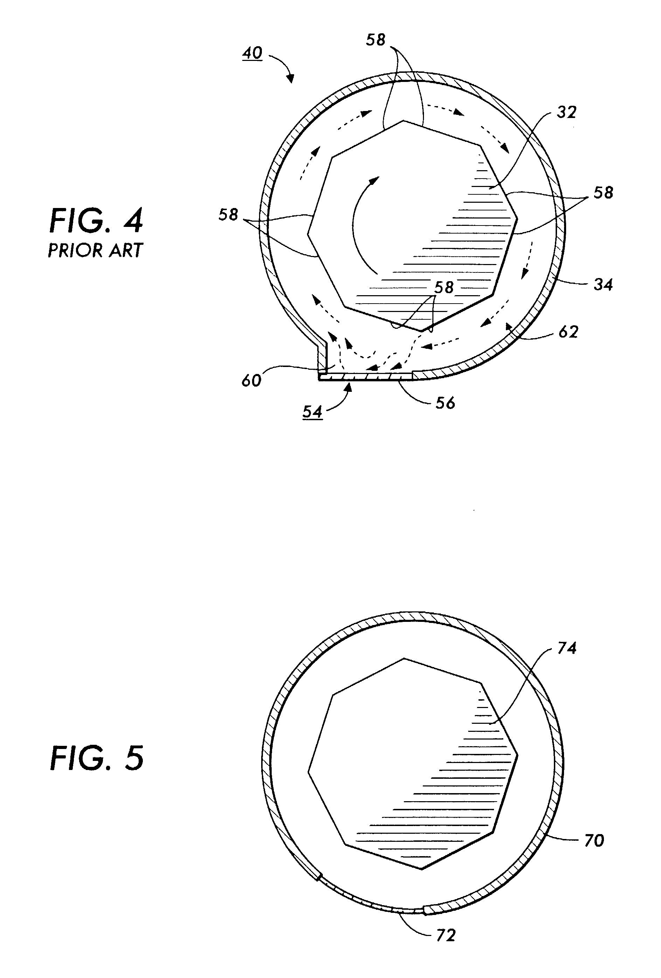

Referring to Figure 3, there is shown a tangential view of a scanning system 40 incorporating the polygon 32 of Figure 2. Also, Figure 4 shows a cross sectional view of the cover 34 of Figure 2 along plan A-A. The scanning system 40 utilizes a laser light source 42, a collimator 44, pre-polygon optics 46, a multi-faceted rotating polygon mirror 32 as the scanning element, a polygon cover 34, post polygon optics 48 and a photosensitive medium 50. The laser light source 42 sends a light beam 52 to the rotating polygon mirror 32 through the collimator 44 and the pre-polygon optics 46.

Cover 34 has an opening 54 to allow the light beam 52 to enter and exit the cover 34. The opening 54, is covered by a flat glass 56 to enclose the polygon within the cover 34. This approach reduces the noise level. However, it is not sufficient to create a quiet polygon.

After months of studying the problem, it became apparent that the design of the cover 34 does not allow the noise to be sufficiently reduced. Referring to Figure 4, there is shown a cross sectional view of the cover 34 of Figure 2 along plane A-A. Within the cover 34, as the polygon 32 rotates, its facets 58 move the air around the polygon. Since the air within the cover is a limited amount of air, the rotation of the polygon should generate less noise in comparison to the noise level of an uncovered polygon. However, the area 60 which is created by the opening for the flat window 56 creates a non-uniformity in the path of the air flow. Once the air moving in the circular area 62 reaches the area 60, it flows in and out of the area 60 causing a turbulence. The turbulence in the area 60 again generates an undesirable noise.

Once the problem was recognized, the first approach was to eliminate the area 60 and replace the flat window with a cylindrical window. Referring to Figure 5, there is shown a tangential cross sectional view of a polygon cover 70 with a cylindrical window 72 covering a polygon 74. Replacing a flat window by a cylindrical window is not a simple substitution since a cylindrical window has different optical properties compared to a flat window. A cylindrical window requires a whole new design for the optical elements of the scanning system.

Typically, a flat window is used in a tangential offset scanning system. Referring back to Figure 3, the scanning system 40 is a tangential offset scanning system. In Figure 3, line 76 is the optical axis (scan axis) of the scanning system 40. The light beam 52 is being shone onto the polygon 32 on a tangential plane from a certain direction N₁ to avoid the optical elements such as post polygon optics 48. As the polygon 32 rotates, the reflected light beam 52 scans a scan line S₁ on the photoreceptor 50 by moving from position shown as 78 to position shown as 79. When the light beam is on position 78, it strikes the scan line S₁ at the start of scan a₁ and when the it is at position 79 it strikes the scan line S₁ at the end of scan b₁. This system is designed in such a manner that when the scanning light beam reaches the center c₁ of the scan line S₁, the light beam overlaps the optical axis 76. Also, the scanning system 40 is designed in such a manner that the optical axis 76 is perpendicular to the flat window 56.

In the system of Figure 3, since the optical axis of the window 56 coincides with the optical axis 76, the window does not affect the passing light beam 52.

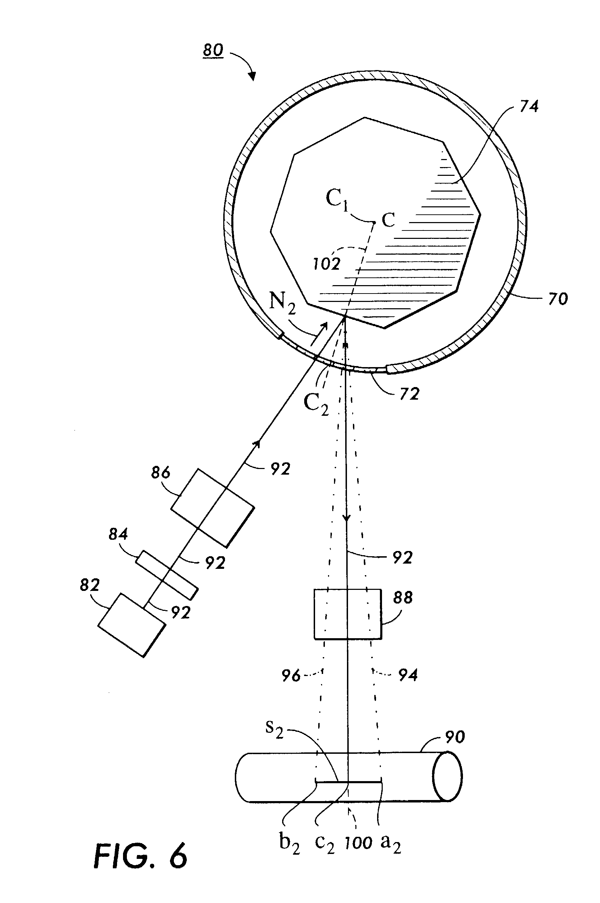

Substituting a flat window by a cylindrical window introduces an optical axis to the scanning system which is positioned differently than the optical axis of the scanning system. Referring to Figure 6, there is shown a tangential view of a tangential offset scanning system 80 incorporating the polygon 74 and the cover 70 of Figure 5. The scanning system 80 utilizes a laser light source 82, a collimator 84, pre-polygon optics 86, a multi-faceted rotating polygon mirror 74 as the scanning element, a polygon cover 70 with a cylindrical window 72, post polygon optics 88 and a photosensitive medium 90. The laser light source 82 sends a light beam 92 to the rotating polygon mirror 74 through the collimator 84 and the pre-polygon optics 86. In Figure 6, the path of the light beam 92 is kept the same as the path of the light beam 52 shown in the scanning system 40 of Figure 3 to illustrate the problem caused by replacing a flat window with a cylindrical window.

The light beam 92 is shone onto the polygon 74 at a direction N₂ to avoid the post optical elements 88 of the scanning system 80. The reflected light beam scans a scan line S₂ on the photoreceptor 90 by moving from position 94 to position 96. When the light beam is on position 94, it strikes the scan line S₂ at the start of scan a₂ and when the light beam is on position 96, it strikes the scan line S₂ at the end of scan b₂. In this configuration, when the light beam strikes the scan line S₂ at the center c₂ of the scan line S₂, its position overlaps the optical axis 100 of the scanning system 80.

However, in this system, the cylindrical window 72 has an optical axis 102 which is offset with respect to the optical axis 100 of the scanning system 80. The optical axis 102 is defined as a line connecting the center C of the cover 70, which is coincident with the center C1 of the polygon 74, to the center C2 of the window 72. It should be noted that the centers C, C1 and C2 all are located on a common tangential plane which also holds the entering and exiting light beam 92. Since the optical axis 102 of the cylindrical window 72 and the optical axis 100 of the scanning system 80 do not overlap, the reflected light beam 92 will have aberrations.

In order to solve the aberration problem, a different design of the scanning system is needed. One option to eliminate the aberration problem is to overlap the optical axis 102 of the cylindrical window over the optical axis 100 of the scanning system. This will require the light beam 92 to be placed over the optical axis 100 of the scanning system. However, this is not a feasible solution since the placement of the laser diode on the optical axis interferes with all the optical elements and the reflected light beam from the polygon. Therefore, a different approach is needed.

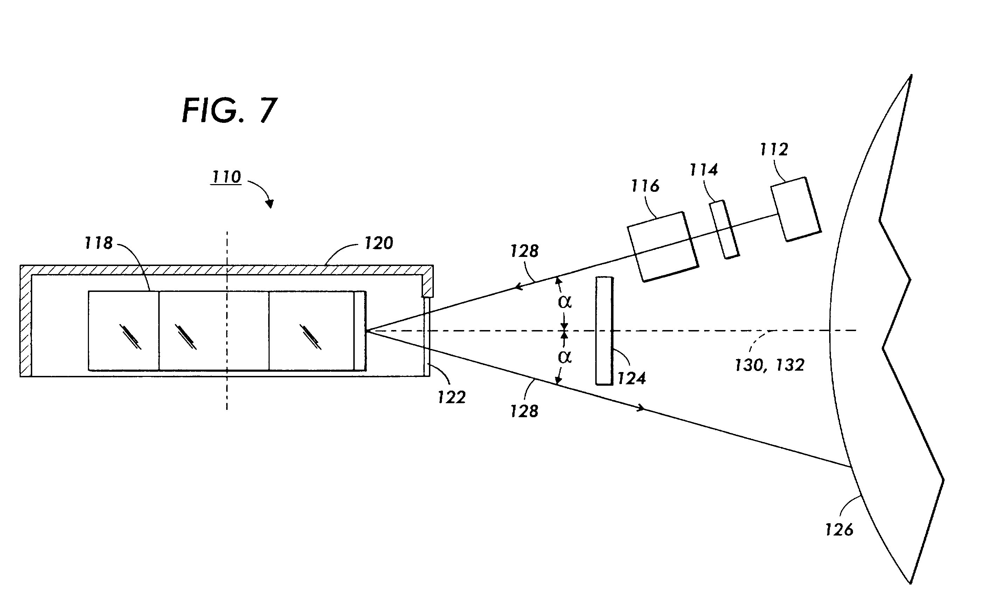

Referring to Figure 7, there is shown a sagittal view of a scanning system 110 of this invention. The scanning system 110 is a sagittal offset system. The scanning system 110 utilizes a laser light source 112, a collimator 114, pre-polygon optics 116, a multi-faceted rotating polygon mirror 118 as the scanning element, a polygon cover 120 with a cylindrical window 122, a f-theta lens 124 and a photosensitive medium 126. For the purpose of simplicity, only the f-theta lens 124 of the post polygon optics is shown. The laser light source 112 sends a light beam 128 to the rotating polygon mirror 118 through the collimator 114, pre-polygon optics 116 and the cylindrical window 122.

In the scanning system 110, the optical axis 130 of the cylindrical window 122 overlaps the optical axis 132 of the scanning system 110. However, the light beam 128 is shone onto the photoreceptor in such a manner that it has an angle α on a sagittal plane with respect to the optical axis 130 of the scanning system 110. In this system, once the light beam 128 strikes the polygon 118, it will be reflected with an angle α with respect to the optical axis 130. The angle α in turn causes a different problem.

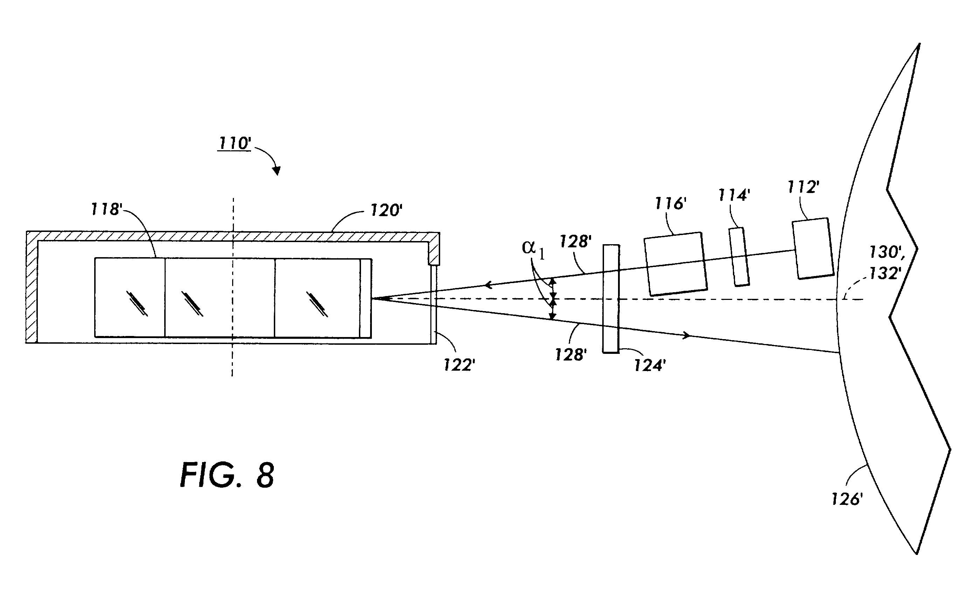

Due to the sagittal angle α between the light beam 128 and the optical axis 130 of the scanning system 110, the scan line on the photoreceptor will have a bow. Therefore, to reduce the bow on the scan line, the angle α has to be reduced. However, reducing the angle α will cause yet another problem. Referring to Figure 8, there is shown the scanning system 110 of Figure 7 in which the angle of the light beam 128 with respect to the optical axis 130 is reduced. In Figure 8, those elements which are the same as disclosed in the description of Figure 7, are designated by the same reference numerals with a prime " ' " affixed thereto. Once the angle α of Figure 7 is reduced to angle α₁ of Figure 8, the light beam 128' will pass through the f-theta lens 124' prior to striking the polygon 118'. This in turn will disturb the design of the scanning system.

Typically, in a conventional scanning system, a light beam passes through an f-theta lens after it is reflected from the polygon and therefore, the pre-polygon optics can be designed independent of the post polygon optics. Contrary to a conventional scanning system, in a scanning system in which the light beam passes through the f-theta lens prior to and after striking the polygon 118', the pre-polygon optics and the post polygon optics have to be designed as an integral system. Furthermore, In the scanning system 110', since the cylindrical window 122' has optical properties different than the optical properties of a flat window, the f-theta lens of the post polygon optics 124' has to be designed to compensate for the extra optical properties of the cylindrical window 122'.

As a result, in order to use a cylindrical window, a sagittal offset scanning system has to be utilized, the angle of the light beam with respect to the optical axis of the scanning system has to be reduced, the pre-polygon and the post polygon optics have to be designed as an integral system and the f-theta lens of the post polygon optics has to be designed to compensate for the optical properties of the cylindrical window.

Once, all the design issues were resolved, the cover 120' of the scanning system 110' did not sufficiently reduce the noise problem. After carefully studying the cover 120', it was found that the difference in the thickness of the cylindrical window 122' and the cover 120' creates an extra space similar to the space 60 of the cover 34 of Figure 4.

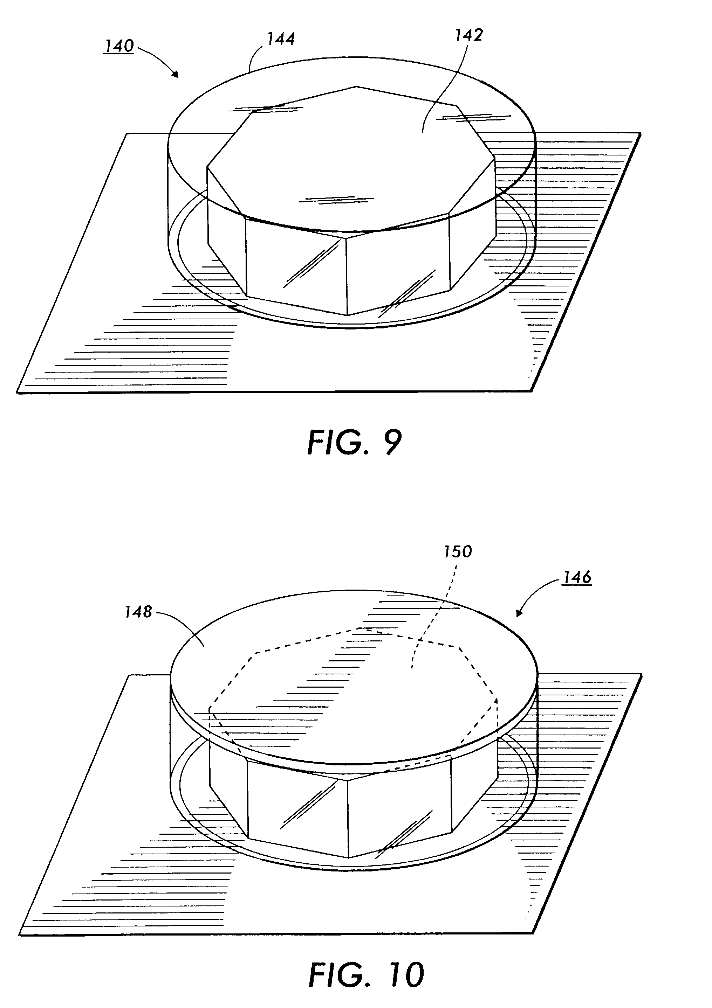

Referring to Figure 9, there is shown a preferred embodiment of this invention. In Figure 9, a one piece cylindrical transparent cover 140 is used to cover polygon 142. The transparent cover 140 which can be made from materials such as glass or plastic has all the properties of the cylindrical window 122' of Figure 8 and requires the same design criteria as the scanning system 110' of Figure 8.

The transparent cylindrical cover 140 of this invention creates a uniform area around the rotating polygon mirror in order to reduce the turbulence created by nonuniformity of the path of the air flow. As a result, the transparent cover 140 substantially reduces the noise of the polygon 142 at high speeds such as 30 Krpm and greater. For a better result, polygon 142 and cover 140 have to be concentric and their sizes have to be close to each other. The closer the size of the cover 140 to the size of the polygon 142, the less air is moved between the polygon 142 and the cover 140. As a result, by keeping the size of the cover 140 close to the size of the polygon 142, there will be less turbulence and less noise. However, the size of the cover 140 has to allow the polygon 142 to freely rotate.

Cover 140 not only substantially reduces the noise it also causes the polygon to generate less heat. Since the turbulence is reduced, the polygon 142 rotates with less friction from the turbulence and therefore, it generates less heat and draws less electrical energy.

The cylindrical cover 140 has a transparent integral top 144 as shown in Figure 9. However, a cylindrical cover can be designed to have a non-transparent cover. Referring to Figure 10, there is shown a cylindrical cover 146, which has a non-transparent top 148, covering polygon 150.

It should be noted that, the tops 144 and 148 can be designed to have a non-flat shape such as a dome.

## Claims

1. A raster scanning system comprising:
a closed housing (120) having a cylindrical wall interposed between a top and a base;
a rotating polygon mirror (118),
said rotating polygon mirror (118) being located in said housing (120) and being rotatably mounted on said base of said housing,
said housing being of a dimension to accommodate the rotation of said rotating polygon mirror, and
a portion of said cylindrical wall (122) being transparent for transmission of a light beam to and from said rotating polygon mirror.

2. A raster scanning system according to claim 1, wherein said cylindrical wall is transparent.

3. A raster scanning system according to any of the preceding claims, wherein said cylindrical wall and said top of said housing are one piece.

4. A raster scanning system according to claim 1 or claim 2, wherein said top of said housing is transparent.

5. A raster scanning system according to claim 1 or claim 2, wherein said top of said housing is non-transparent.

6. A raster scanning system according to any of the preceding claims, wherein said top of said housing is flat.

7. A raster scanning system according to any of the preceding claims, wherein said raster scanning system is a sagittal offset scanning system.
